Europäisches Patentamt

European Patent Office

Office européen des brevets

(19)

(11) Veröffentlichungsnummer: **0 071 068**
**B1**

# (12) EUROPÄISCHE PATENTSCHRIFT

(45) Veröffentlichungstag der Patentschrift:
**12.06.85**

(21) Anmeldenummer: **82106231.2**

(22) Anmeldetag: **13.07.82**

(51) Int. Cl.⁴: **B 07 C 5/12,** B 65 G 47/64,
B 65 G 47/84

(54) **Einrichtung zum Sortieren von Behältern.**

(30) Priorität: **30.07.81 DE 3130052**

(43) Veröffentlichungstag der Anmeldung:
**09.02.83 Patentblatt 83/6**

(45) Bekanntmachung des Hinweises auf die Patenterteilung:
**12.06.85 Patentblatt 85/24**

(84) Benannte Vertragsstaaten:
**AT BE CH DE FR GB IT LI LU NL SE**

(56) Entgegenhaltungen:
**EP - A - 0 003 111**
**DE - A - 1 955 714**
**DE - A - 2 002 150**
**US - A - 3 437 200**

(73) Patentinhaber: **Alcoa Deutschland GmbH**
**Maschinenbau, Robert-Bosch-Strasse 6,**
**D-6806 Viernheim / Hessen (DE)**

(72) Erfinder: **Gölz, Otto, Ortsstrasse 92,**
**D-6148 Heppenheim-Erbach (DE)**
Erfinder: **Kiefer, Ernst, Ing.-grad., Ortsstrasse 141,**
**D-6943 Birkenau 3 (DE)**

(74) Vertreter: **Ratzel, Gerhard, Dr., Seckenheimer**
**Strasse 36a, D-6800 Mannheim 1 (DE)**

ACTORUM AG

## Beschreibung

Die Erfindung betrifft eine Einrichtung zum Aussortieren fehlerhafter Behälter, insbesondere Flaschen, aus einem Transportstrom, bei dem eine Prüfstation die an ihr vorbeigeführten Behälter nach Massgabe vorgegebener Kriterien wie Form, Grösse, Farbe, Füllstand, Gewicht usw. überprüft und eine Weiche steuert, die fehlerhafte Behälter aus dem Transportstrom ablenkt.

Bekannt ist unter anderem eine Anordnung zum Abweisen von fehlerhaften Behältern aus einem entlang einer ersten Transportbahn kontinuierlich vorbeigeführten Strom, wobei die Prüfstation beim Erkennen eines fehlerhaften Behälters eine Abweisvorrichtung steuert, die den Behälter in eine zweite Transportbahn überführt (DE-AS Nr. 1955714).

Bei der bekannten Vorrichtung ist die Abweisvorrichtung im Bereich einer Unterbrechung der Tragfläche der ersten Transportbahn angeordnet und weist eine synchron angetriebene Förderkette mit einzelne Behälter tragenden schwenkbaren Klappen auf, welche im weggeklappten Zustand ein Herunterfallen der Behälter auf die darunter angeordnete zweite Transportbahn gestattet.

Eine derartige Anordnung ist jedoch nur bei relativ gedrungenen, standfesten Behältern anwendbar, die möglichst nicht von der zylindrischen From abweichen, da sonst ein relativ grosser Aufwand zur Führung erforderlich wird, um ein Umkippen der Behälter beim Durchfallen zu verhindern.

Im Falle einer Aussonderung von Flaschen mit kohlensäurehaltigen Trinkflüssigkeiten, die wegen zu geringer Füllung beispielsweise einer Nachfüllstation zugeführt werden sollen, ist das Herabfallen auf eine tiefergelegene Transportbahn unzulässig. Hinzu kommt der weitere Nachteil der bekannten Vorrichtung, dass sie sehr aufwendig, im mechanischen Teil recht kompliziert und dadurch störanfällig, zumindest aber aufwendig bezüglich Wartung und Überwachung ist.

Aufgabe der Erfindung ist es, gegenüber diesem Stand der Technik eine Einrichtung zum Aussortieren fehlerhafter Behälter, insbesondere Flaschen, zur Verfügung zu stellen, die ohne schockartige oder auch nur rasch ändernde Bewegungsabläufe arbeitet, bei beliebig geformten Behältern zur Anwendung gebracht werden kann, empfindliche Flüssigkeitsinhalte nicht in unzulässige Bewegung versetzt, und dabei möglichst geräuschlos ist. Weiter soll die verbesserte und fortentwikkelte Einrichtung zwecks höchstmöglicher Verfügbarkeit unkompliziert und wartungsfreundlich sein.

Erfindungsgemäss wird die Aufgabe dadurch gelöst, dass bei einer Einrichtung zum Aussortieren fehlerhafter Behälter, bei der eine von einer Kontrollstation gesteuerte Weiche die fehlerhaften Behälter aus dem Transportstrom ablenkt, die Weiche im Übergangs- und/oder Überlappungsbereich einer ersten Transporteinrichtung und einer zweiten Transporteinrichtung als seitliche Führung angeordnet ist und ein in sich formveränderliches, unstarres Führungsorgan aufweist, das durch eine Reihe annähernd paralleler, in etwa senkrecht zur Führung beweglich angeordneter Verbindungselemente im Abstand formschlüssig mit einem ebenfalls in sich formveränderlichen, unstarren Stellorgan verbunden ist, das von einer Reihe annähernd paralleler, in etwa senkrecht zum Stellorgan an diesem beweglich angelenkter Rückstellelemente gegen eine ortsfeste, dem Verlauf der Transporteinrichtung angepasste Anschlagschablone elastisch zur Anlage gebracht wird, und dass parallel zur ersten Transporteinrichtung, im Bereich der Weiche und in einer Ebene oberhalb derselben, eine endlose Steuerkette mit zu den Behältern streckenweise parallel, abstandsgleich und synchron antreibbaren Steuerkörpern angeordnet ist, die mit Mitteln zum Ein- und Ausrücken in eine Eingriffs- oder Neutralposition in den Gliedern der Kette ausgestattet und nach Massgabe der Steuerimpulse der Prüfstation ein- und/oder ausrückbar sind, wobei ein Steuerkörper in eingerückter Stellung mit dem Stellorgan derart im Eingriff ist, dass sich dieses von der Anschlagschablone abhebt und unter Einwirkung der elastischen Stellkräfte der Rückstellelemente an den Steuerkörper anlegt, welcher das Stellorgan entsprechend seiner Form und Bewegung in eine sich geradlinig fortsetzende Schlängelbewegung versetzt, die sich durch die Verbindungselemente auf das Führungsorgan überträgt und eine Richtungsänderung eines fehlerhaften Behälters, der sich synchron mit dem im Eingriff befindlichen Steuerkörper im Transportstrom bewegt, zur Folge hat.

Mit der erfindungsgemässen Einrichtung ergibt sich der Vorteil, dass sie ohne schockartige oder auch nur rasch ändernde Bewegungsabläufe arbeitet, infolgedessen annähernd geräuschlos funktioniert, dass sie bei beliebig geformten Behältern zur Anwendung gebracht werden kann, empfindliche Flüssigkeitsinhalte nicht in unzulässige Bewegung versetzt, und dabei unkompliziert und wartungsfreundlich ist. Mithin erfüllt die erfindungsgemässe Ausgestaltung der Einrichtung zum Aussortieren fehlerhafter Behälter in idealer Weise die gestellte Aufgabe.

Dabei sieht eine Ausgestaltung vor, dass das Führungsorgan und das Stellorgan vorzugsweise gleichartige Gliederketten sind.

Solche Ketten erfüllen bestens die an das Führungsorgan auf Grund seiner Funktion gestellten Anforderungen, sie sind langlebig, unempfindlich, geräuschlos und handelsüblich. Zudem ermöglichen sie infolge der gelenkigen Gliederanordnung ein Anlenken der Verbindungs- und/oder Rückstellelemente ohne Schwierigkeiten.

Es können aber auch, nach einem alternativen Vorschlag, anstelle solche Ketten elastische Bänder oder Gurte verwendet werden.

Eine Ausgestaltung der erfindungsgemässen Einrichtung sieht vor, dass die erste Transporteinrichtung einen geradlinigen Verlauf hat, während die zweite Transporteinrichtung kreisbogenförmig und vorzugsweise als Transportstern ausgebildet ist.

Dabei kann die Anordnung so getroffen sein, dass die erste Transporteinrichtung mit einer zu ihr parallel geführten Einteilungsschnecke zusammenwirkt und mit dem Führungsorgan sowie mit dem Transportstern eine Kurvenbahn bildet, und dass tangential zum Transportstern, parallel zur ersten Transporteinrichtung, eine dritte Transporteinrichtung zur Aufnahme aussortierter, fehlerhafter Behälter vorgesehen bzw. angeordnet ist.

Mit dieser Anordnung wird in vorteilhafter Weise erreicht, dass sowohl die für gut befundenen Behälter als auch die als fehlerhaft erkannten in möglichst schonender Weise, ohne jede Erschütterung, in die verschiedenen Transporteinrichtungen gelenkt und dabei voneinander getrennt werden.

Falls es jedoch aus Gründen z. B. einer entsprechenden vorgegebenen Anordnung zweckmässiger sein sollte, einen im wesentlichen geradlinigen Verlauf der Transporteinrichtung vorzusehen, kann dies dadurch erreicht werden, dass die Gliederkette des Führungsorganes parallel neben der ersten Transporteinrichtung angeordnet ist und in Ausgangsstellung im Zusammenwirken mit der Transporteinrichtung einen freien Durchlauf der Behälter gestattet, und dass auf der anderen Seite der Transporteinrichtung, neben und parallel zu dieser und zur Gliederkette, die zweite Transporteinrichtung vorzugsweise geradlinig angeordnet ist, wobei die Anordnung so getroffen ist, dass ein fehlerhafter Behälter auf die zweite Transporteinrichtung abgewiesen wird.

Um die Laufzeit eines fehlerhaft erkannten Behälters von der Prüfstation bis zur Weiche zu kompensieren, ist vorgesehen, dass zwischen einem Signalgeber der Prüfstation und den von den Signalen angesteuerten Mitteln zur Abstandsverstellung an der Steuerkette ein Signalimpulsspeicher angeordnet ist.

Eine Ausgestaltung insbesondere der Steuereinrichtung sieht vor, dass die Steuerkörper Scheiben mit einer der Querschnittsform der Behälter entsprechenden Form sind, die in einer zur Transporteinrichtung und zur Steuerkette parallelen Ebene dicht oberhalb des Stellorganes mit der Steuerkette umlaufen, und dass die Scheiben mit stangenförmigen Achsen in Bohrungen der Kettenglieder zwischen Rasten höhenverstellbar geführt sind, wobei die Achsen über die Kettenglieder überstehen, und dass wenigstens ein als Mittel zur Abstandsverstellung vorgesehener, mechanisch angetriebener Stellmechanismus, vorzugsweise eine hydraulisch oder pneumatisch betätigbare Kolben/Zylinder-Einheit oberhalb der überstehenden Achse angeordnet ist und von der Prüfstation oder dem Signalimpulsspeicher derart angesteuert wird, dass der den Steuerimpuls auslösende Behälter und die durch Einrücken in den Eingriff mit dem Stellorgan aktivierte Scheibe synchron miteinander den Bereich der Weiche durchlaufen.

Die Rückstellung der in den Eingriff gebrachten Steuerscheiben wird in einfacher Weise dadurch erreicht, dass im Rücklaufweg der Steuerkörper ein diese zurückstellender Körper, vorzugsweise ein Auflaufkeil, angeordnet ist.

Ein Ausführungsbeispiel der Erfindung ist in den beigefügten Zeichnungen gezeigt und wird im folgenden näher erläutert.

Es zeigen:

Fig. 1 eine erfindungsgemässe Einrichtung mit der unangesteuerten Weiche in Ruhestellung in Draufsicht, wobei die in Blickrichtung die Weiche überdeckende Steuerkette mit Steuerkörpern weggelassen und durch gestrichelte Linien in ihrer Lage angedeutet ist,

Fig. 2 ebenfalls in Draufsicht die Einrichtung gemäss Fig. 1, jedoch mit angesteuerter Weiche, und

Fig. 3 einen Schnitt durch die Einrichtung gemäss Fig. 1, insbesondere mit Darstellung der Steuereinrichtung, mit Schnittebene quer zur geradlinigen Transporteinrichtung.

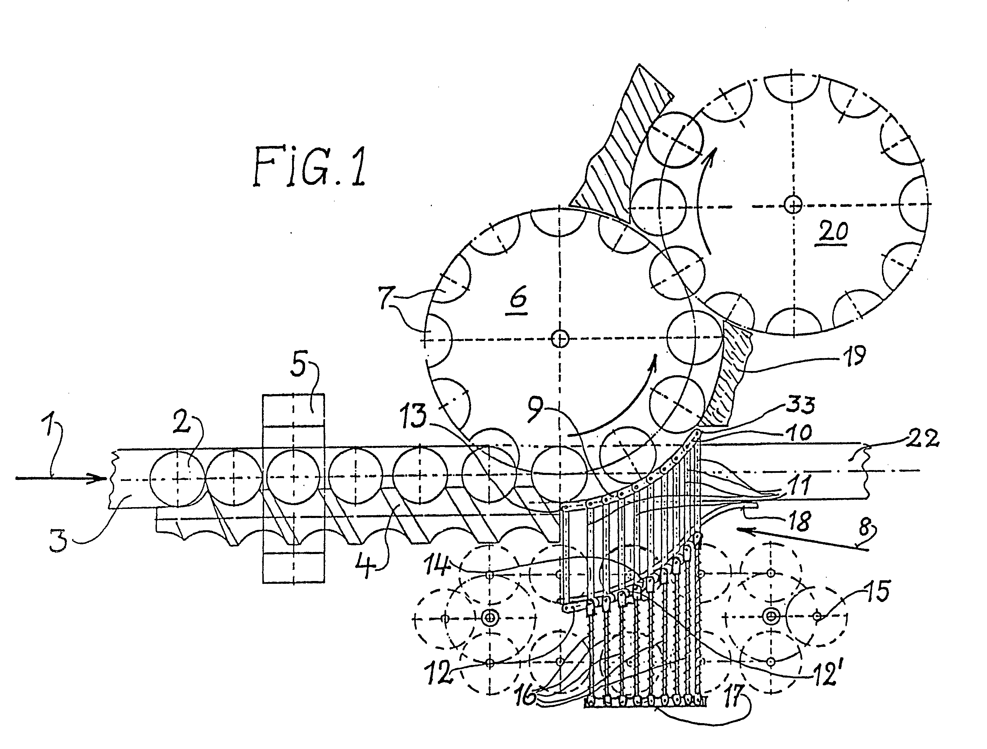

Bei der in der Fig. 1 gezeigten Einrichtung werden die in geschlossenem Transportstrom gemäss Pfeil 1 ankommenden Behälter 2 mit einer geradlinigen Transportvorrichtung 3 gegen eine Einteilungsschnecke 4 gefördert, die die Behälter 2 in eine laufende Reihe mit konstanten Abständen und konstanter Geschwindigkeit einteilt.

Die Behälter werden dabei an einer Prüfstation 5 vorbeigeführt, die mittels bekannter Sensoren wie beispielsweise einer Kombination mehrerer Lichtschranken die äusseren Umrisse sowie die Füllhöhe des Inhalts und/oder Farbe des Behälters ermitteln, die ermittelten Werte mit vorgegebenen Sollwerten vergleicht und bei Abweichung ein Steuersignal zum Ausscheiden des Behälters 2 auslöst. Bei undurchsichtigen oder sehr dunklen Behältern 2 könnte eine Füllungskontrolle ggf. auch mittels einer dynamischen Wägeeinrichtung im Bereich der Prüfstation 5 ermittelt werden. In dem gemäss Fig. 1 dargestellten Falle einwandfreier Behälter 2, wobei kein Steuersignal erfolgt, laufen die Behälter 2 im Führungsgewinde der Einteilungsschnecke 4 in den synchron mit derselben angetriebenen Transportstern 6 in dessen bogenförmige Aufnahmetaschen 7 ein. Dieser Transportstern 6 bildet die innere Führung einer kreisbogenförmigen Transportstrecke, deren äussere Führung vom Führungsglied 9 der Weiche 8 gebildet wird. Dieses Führungsglied ist im gezeigten Ausführungsbeispiel einer Gliederkette 10, beispielsweise in der Art einer Gallschen Lastkette oder Büchsenkette. Diese ist mit ihrem Anfangsglied 13 fest angeordnet, im übrigen aber mit den folgenden Kettengliedern frei beweglich.

Diese werden von Verbindungselementen 11, die an den Verbindungsbolzen der Kettenglieder beweglich angelenkt sind und gegenüberliegend ebenfalls beweglich an Kettenglieder 12, 12' einer als Stellorgan 14 angeordneten Kette gleicher Art angelenkt sind, in der ihr jeweils vom Stellorgan zugeordneten Stellung gehalten. Dieses ist mit dem Anfangsglied 12 ebenfalls fest angeordnet, im übrigen aber mit den folgenden Kettengliedern 12' in Richtung auf die Anordnung der Steuerkette 15 frei beweglich. Dabei wird das Stellorgan 14 von an seinen Kettenbolzen ebenfalls beweglich angelenkten Rückstellelemen-

ten 16 mit federnder Rückstellkraft, wobei sich die Rückstellelemente 16 gegen ein festes Widerlager 17 gelenkig abstützen, gegen eine ortsfest angeordnete, dem Verlauf der Umlenkung von der geraden in die kreisbogenförmige Transportbahn entsprechend gekrümmte Anschlagschablone 18 zur Anlage gebracht, wodurch seine Ausgangslage im unangesteuerten Zustand festgelegt ist. Infolge der Parallelverbindung beider Ketten, d. h. des Führungsorganes 9 mit dem Stellorgan 14, nimmt das erstere infolge der mit den Verbindungselementen 11 hergestellten formschlüssigen Verbindung jederzeit exakt die Stellung bzw. Form des letzteren an. Am Ablaufende des Führungsorganes 9 übernimmt eine feste Führung 19 zusammen mit dem Transportstern 6 die weitere Umlenkung der „gut"-Befund-Behälter 2 zu einer anschliessenden Transportstrecke oder Arbeitsstation wie beispielsweise dem Stern 20.

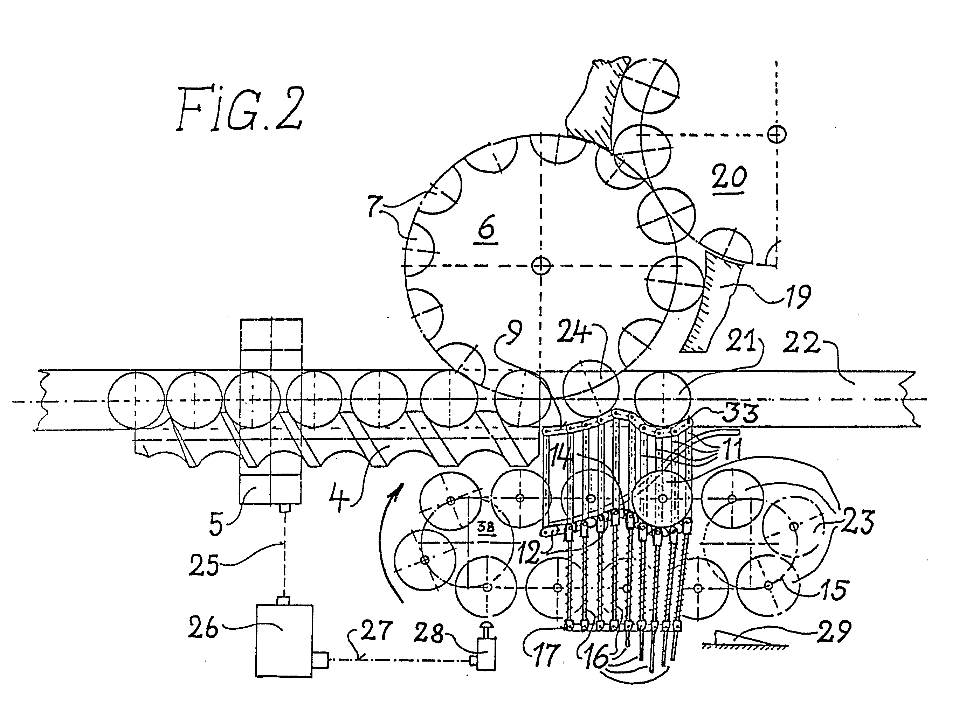

In der Fig. 2 ist eine Situation dargestellt, bei welcher ein „fehlerhaft"-Befund-Behälter 21 vom Führungsorgan 9 durch entsprechend gesteuerte Schlängelbewegungen seiner Kettenglieder 12, aus der Umlenkung in die Kreisbahn heraus, geradeaus in die gerade verlaufende Abweisstrecke 22 – auf's tote Gleis – abgewiesen wird. Dabei wird die Ausführung der Schlängelbewegung, die von dem Stellorgan 14 ausgehend auf das Führungsorgan 9 in der vorgängig beschriebenen Weise übertragen wird, durch den Eingriff des Steuerkörpers 23 in die Glieder 12, 12' der Kette des Stellorganes 14 verursacht, der sich an den Gliedern 12, 12' abwälzend an dem Stellorgan 14 entlangbewegt, dabei die Glieder gegen die Rückstellkraft der Rückstellelemente 16 von der Anlageposition an der Anschlagschablone 18 abhebt und in dem dadurch eingeleiteten Bewegungsablauf eine zyklische Schlängelbewegung induziert, deren Zyklus der zeitlichen Behälterfolge der Transporteinrichtung entspricht. Weil sowohl das Führungs- wie auch das Stellorgan 9, 14 in sich unstarr und nahezu unbegrenzt schnell und elastisch eine vorübergehende Formveränderung nachvollziehen können, nimmt das Führungsorgan 9 unmittelbar hinter dem auszuscheidenden Behälter 21 die Umlenkposition ein, die wellenförmig mit dem nächstfolgenden Behälter 24 mitlaufend diesen in die für „gut"-Befund-Behälter vorgesehene Kreisbahn zwingt.

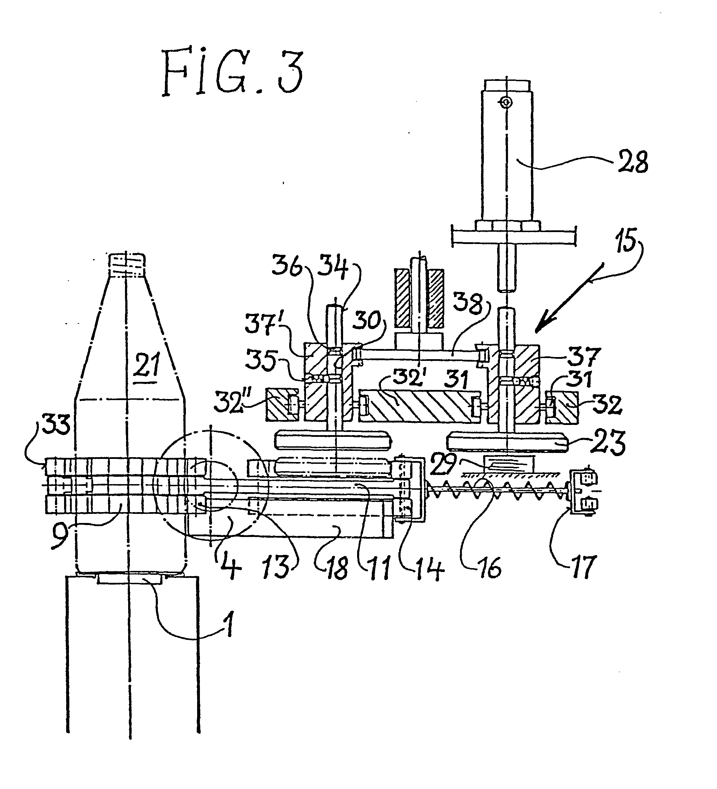

Wie in der Fig. 2 rein schematisch weiter dargestellt, erfolgt die Einstellung des Steuerkörpers 23 in die Eingriffsposition mit dem Stellorgan 14 durch einen Steuerimpuls der Prüfstation 5, der über die Signalleitung 25 über eine zwischengeschaltete Rechner- und Speichereinheit 26 und von dort über die Steuerleitung 27 auf den schematisch angedeuteten Stellmechanismus 28 wirkt und diesen in der Weise aktiviert, dass er die zugleich mit dem auszusortierenden Behälter 21 in den Bereich der Weiche 8 einlaufende und diesen synchron mit dem Behälter 21 durchlaufend Steuerscheibe 23 zum Eingriff entsprechend verschiebt, wie dies nachfolgend eingehender anhand der Fig. 3 erkennbar gemacht wird. Beim Rücklauf der Steuerscheibe 23 wird diese einen ebenfalls nur schematisch angedeuteten Rückstellnocken 29 passieren, der die Steuerscheibe 23 wieder in die neutrale Ausgangsposition zurückstellt.

Anordnung und Funktion der Steuereinrichtung der Weiche 8 gehen im einzelnen aus der detaillierten Darstellung in der Fig. 3 hervor. Darin sind gleiche Funktionselemente wie in den vorgängig beschriebenen Figuren mit gleichen Bezugszeichen versehen. Die Steuerkette 15 setzt sich aus massiven Kettengliedern 37, 37' zusammen, die miteinander gelenkig verbunden mit Führungsrollen 31 in Führungen 32, 32', 32" zwangsgeführt und mittels Antriebs- und/oder Umlenkrädern 38 mit der Einteilungsschnecke 4 bzw. dem Transportstern 6 im Bewegungsablauf synchron angetrieben sind. In den Kettengliedern 37, 37' sind Bohrungen 30, die zur Aufnahme und Lagerung der Achsen 34 für die Steuerkörper 23 dienen.

Diese axial in der Bohrung 30 sowie drehbar darin gelagerten Achsen 34 sind an zwei Stellen mit Einkerbungen 36 versehen, die mit federnden Rasten 35 in den Kettengliedern 37, 37' derart zusammenwirken, dass sie die Achsen 34 in zwei Höhenlagen fixieren. In der dargestellten, mit ausgezogenen Strichen markierten Position sind die Steuerkörper 23, die als Steuerscheiben ausgebildet sind, ausserhalb eines Eingriffs mit dem Stellorgan 14, während die gestrichelt angedeutete untere Position die Eingriffsstellung ist. Die Achsen 34 stehen nach oben über die Kettenglieder 37, 37' über und bieten so dem Stellmechanismus 28 die Möglichkeit, die Achsen 34 beim Vorbeilauf in die untere Eingriffsposition zu verstellen. Beim Rücklauf überfahren diese den Rückstellkeil 29, der die Steuerkörper 23 wieder in die obere – neutrale – Position zurückstellt. Auf diese Weise werden, wie vorgängig beschrieben, entsprechende Steuerkörper im Gleichlauf mit auszusondernden Behältern 21 durch den Bereich der Weiche 8 im Eingriff mit dem Stellorgan 14 – wie in der Fig. 2 dargestellt – hindurchgeführt.

Aus der Darstellung gemäss Fig. 3 ist weiter das Führungsorgan 9 zu erkennen, dessen erstes Kettenglied 13 an einem Festpunkt angelenkt ist, und dessen Ende in der ursprünglichen Kurvenlage bei 33 erkennbar wird. Durch die gelenkige Verbindung von Stellorgan 14 und Führungsorgan 9 über die Verbindungselemente 11 ergibt sich zwischen diesen ein idealer Formschluss, wobei in der Ausgangsstellung der Weiche das Stellorgan 14 durch die Federkraft der Rückstellelemente 16, die sich gegen das feste Widerlager 17 abstützen, gegen die gekrümmte Anschlagschablone 18 zur Anlage kommt und damit das Führungsorgan 9 in die Kurvenform gelegt wird. Sobald jedoch ein Steuerkörper 23 durch Steuerkette 30 durch den Stellmechanismus 28 infolge eines auf diesen wirkenden Steuerimpulses in die Eingriffsstellung verstellt wurde, wälzt sich dieser innerhalb des Stellorganes infolge seiner Fortbewegung an diesem ab, hebt dabei die von ihm erfassten Kettenglieder 12, 12' von der Anschlagschablone 18 gegen die Kraft der Rückstellelemente 16 ab und erzwingt damit im Abrollvorgang, im Zusammenwirken mit dem Stellorgan 14, eine Schlängelbewegung, die den auszuscheidenden Behälter 21 wie in einem Wellental fortlaufend in die „geradeaus"-Ausschussbahn 22 ablenkt bzw. fördert.

*Zeichenerklärung*

| 1 | Transportstrom |
|---|---|
| 2 | Behälter |
| 3 | geradlinige Transporteinrichtung |
| 4 | Einteilungsschnecke |
| 5 | Prüfstation |
| 6 | Transportstern |
| 7 | Aufnahmetasche |
| 8 | Weiche |
| 9 | Führungsorgan |
| 10 | Gliederkette |
| 11 | Verbindungselement |
| 12, 12' | Kettenglieder des Stellorganes |
| 13 | Anfangsglied |
| 14 | Stellorgan |
| 15 | Steuerkette |
| 16 | Rückstellelemente |
| 17 | Widerlager |
| 18 | Anschlagschablone |
| 19 | feste Führung |
| 20 | Stern |
| 21 | fehlerhafter Behälter |
| 22 | Abweisstrecke, Ausschussbahn |
| 23 | Steuerkörper |
| 24 | nächster Behälter |
| 25 | Signalleitung |
| 26 | Speichereinheit |
| 27 | Steuerleitung |
| 28 | Stellmechanismus |
| 29 | Rückstell-Nocken/Keil |
| 30 | Bohrung |
| 31 | Rollen |
| 32, 32', 32" | Führung |
| 33 | Ende der Führungskette |
| 34 | Achse |
| 35 | federnde Rasten |
| 36 | Einkerbung |
| 37, 37' | Glieder Steuerkette |
| 38 | Antriebs- und/oder Umlenkrad |

**Patentansprüche**

1. Einrichtung zum Aussortieren fehlerhafter Behälter, insbesondere Flaschen, aus einem Transportstrom, bei dem eine Prüfstation die an ihr vorbeigeführten Behälter nach Massgabe vorgegebener Kriterien wie Form, Grösse, Farbe, Füllstand, Gewicht usw. überprüft und eine Weiche derart steuert, dass diese fehlerhaften Behälter aus dem Transportstrom abgelenkt werden, dadurch gekennzeichnet, dass die Weiche (8) im Übergangs- und/oder Überlappungsbereich einer ersten Transporteinrichtung (3) und einer zweiten Transporteinrichtung (6) als seitliche Führung angeordnet ist und ein in sich formveränderliches, unstarres Führungsorgan (9) aufweist, das durch eine Reihe annähernd paralleler, in etwa senkrecht zur Führung (9) beweglich angelenkter Verbindungselemente (11) im Abstand formschlüssig mit einem ebenfalls in sich formveränderlichen, unstarren Stellorgan (14) verbunden ist, das von einer Reihe annähernd paralleler, in etwa senkrecht zum Stellorgan (14) an diesem beweglich angelenkter Rückstellelemente (16) gegen eine ortsfeste, dem Verlauf der Transporteinrichtung (3, 6) angepasste Anschlagschablone (18) elastisch zur Anlage gebracht wird, und dass parallel zur ersten Transporteinrichtung (3) im Bereich der Weiche (8) und in einer Ebene oberhalb derselben eine endlose Steuerkette (15) mit zu den Behältern (2, 21) streckenweise parallel, abstandsgleich und synchron antreibbaren Steuerkörpern (23) angeordnet ist, die mit Mitteln (34, 35, 36) zum Ein- und Ausrücken in eine Eingriffs- oder Neutralposition mit dem Stellorgan (14) in den Gliedern (37, 37') der Kette 15 ausgestattet und nach Massgabe der Steuerimpulse der Prüfstation (5) ein- und/oder ausrückbar sind, wobei ein Steuerkörper (23) in eingerückter Stellung mit dem Stellorgan (14) derart im Eingriff ist, dass sich dieses von der Anschlagschablone (18) abhebt und sich unter Einwirkung der elastischen Stellkräfte der Rückstellelemente (16) an den Steuerkörper (23) anlegt, welcher das Stellorgan (14) entsprechend seiner Form und Bewegung in eine sich geradlinig fortsetzende Schlängelbewegung versetzt, die sich durch die Verbindungselemente (11) auf das Führungsorgan (9) überträgt und eine Richtungsänderung eines fehlerhaften Behälters (21), der sich synchron mit dem im Eingriff befindlichen Steuerkörper (23) im Transportstrom (1) bewegt, zur Folge hat.

2. Einrichtung nach Anspruch 1, dadurch gekennzeichnet, dass das Führungsorgan (9) und das Stellorgan (14) vorzugsweise gleichartige Gliederketten (10, 12, 12') sind.

3. Einrichtung nach Anspruch 1, dadurch gekennzeichnet, dass das Führungsorgan (9) und das Stellorgan (14) vorzugsweise gleichartige elastische Bänder oder Gurte sind.

4. Einrichtung nach einem der Ansprüche 1 bis 3, dadurch gekennzeichnet, dass die erste Transporteinrichtung (3) einen geradlinigen Verlauf hat, während die zweite Transporteinrichtung (6) kreisbogenförmig und vorzugsweise als Transportstern ausgebildet ist.

5. Einrichtung nach einem der Ansprüche 1 bis 4, dadurch gekennzeichnet, dass die erste Transporteinrichtung (3) mit einer zu ihr parallel geführten Einteilungsschnecke (4) zusammenwirkt und mit dem Führungsorgan (9) sowie mit dem Transportstern (6) eine Kurvenbahn bildet, und dass tangential zum Transportstern (6), parallel zur ersten Transporteinrichtung (3), eine dritte Transporteinrichtung (22) zur Aufnahme aussortierter, fehlerhafter Behälter (21) vorgesehen ist.

6. Einrichtung nach einem der Ansprüche 1 bis 4, dadurch gekennzeichnet, dass die Gliederkette (10) des Führungsorganes (9) parallel neben der ersten Transporteinrichtung (3) angeordnet ist und in Ausgangsstellung im Zusammenwirken mit der Transporteinrichtung (3) einen freien Durchlauf der Behälter (2) gestattet, und dass auf der anderen Seite der Transporteinrichtung (3), neben und parallel zu dieser und zur Gliederkette (10), die zweite Transporteinrichtung (6) vorzugsweise geradlinig angeordnet ist, wobei die Anordnung so getroffen ist, dass ein fehlerhafter Behälter (21) auf die zweite Transporteinrichtung (6) abgewiesen wird.

7. Einrichtung nach einem der Ansprüche 1 bis 6, dadurch gekennzeichnet, dass zwischen dem einen Signalgeber der Prüfstation (5) und den von den Signalen angesteuerten Mitteln (28), zum Ein- und Ausrücken der Steuerkörper (23) in der Steuerkette (15), ein Signalimpulsspeicher (26) angeordnet ist.

8. Einrichtung nach einem der Ansprüche 1 bis 7, dadurch gekennzeichnet, dass die Steuerkörper (23) Scheiben mit einer der Querschnittsform der Behälter (2, 21) entsprechenden Form sind, die in einer Transporteinrichtung und in einer zur Steuerkette (15) parallelen Ebene dicht oberhalb des Stellorganes (14) mit der Steuerkette (15) umlaufen, und dass die Scheiben (23) mit stangenförmigen Achsen (34) in Bohrungen (30) der Kettenglieder (37, 37') zwischen Rasten (35) höhenverstellbar gehalten sind, wobei die Achsen (34) über die Kettenglieder (37, 37') überstehen, und dass wenigstens ein als Mittel zur Abstandsverstellung vorgesehener, mechanisch angetriebener Stellmechanismus (28), vorzugsweise eine hydraulisch oder pneumatisch betätigbare Kolben/Zylinder-Einheit, oberhalb der überstehenden Achsen (34) angeordnet und vom Signalimpulsspeicher (26) und/oder der Prüfstation (5) derart angesteuert ist, dass der den Steuersignalimpuls auslösende Behälter (21) und die durch Einrücken in den Eingriff mit dem Stellorgan (14) aktivierte Scheibe (23) synchrom miteinander den Bereich der Weiche (8) durchlaufen.

9. Einrichtung nach Anspruch 8, dadurch gekennzeichnet, dass im Rücklaufweg der Steuerkörper (23) ein die durch Einrücken in die Eingriffsstellung aktivierten Scheiben zurückstellender Körper, vorzugsweise ein Auflaufkeil (29), angeordnet ist.

## Claims

1. An apparatus for sorting out defective containers, in particular bottles, from a conveyance path in which an inspection station checks the containers passing it in accordance with predetermined criteria, such as shape, size, colour, filling level, weight, etc., and controls a switch point in such a way that these defective containers are diverted from the conveyance path, characterised in that the switch point (8) is disposed as a lateral guide in a transition and/or overlap zone between a first conveyor means (3) and a second conveyor means (6), and has a deformable non-rigid guide member (9) which is connected spaced from and in form-locking manner to a deformable non-rigid displacement member (14) by a series of generally parallel connecting elements (11) pivoted to move generally perpendicularly to the guide (9), the displacement member (14) being biassed by a series of generally parallel return elements (16) into engagement with a fixed abutment template (18) corresponding to the path of the conveyor means (3, 6), the return elements being generally perpendicular to and pivoted to the displacement member (14), and in that parallel to the first conveyor means (3), in the vicinity of the switch point (8) and in a plane thereabove, there is disposed an endless control chain (15) having control members (23) which in sections are parallel, equidistant and synchronously drivable relative to the containers (2, 21), which control members are provided with means (34, 35, 36) in the links (37, 37') of the chain (15) for engagement into an engaged position with and disengagement into a neutral position from the displacement member (14) and can be engaged and/or disengaged in accordance with the control pulses of the inspection station (5), wherein in an engaged position such a control body (23) is so in engagement with the displacement member (14) that this latter is displaced from the abutment template (18) and, under the action of the bias of the return elements (16), is applied against the control member (23) which displaces the displacement member (14) in conformity with its shape and movement into a linearly extending snaking motion which is transmitted through the connecting elements (11) to the guide member (9) and brings about a diversion from the conveyance path (1) of a defective container (21) which is moved synchronously with the engaged control member (23).

2. An apparatus according to Claim 1, characterised in that the guide member (9) and the displacement member (14) are preferably similar link chains (10, 12, 12').

3. An apparatus according to Claim 1, characterised in that the guide member (9) and the displacement member (14) are preferably similar flexible belts or bands.

4. An apparatus according to one of Claims 1 to 3, characterised in that the first conveyor means (3) has a straight-lined path, whereas the second conveyor means (6) is arcuate and is preferably designed as a conveyor wheel.

5. An apparatus according to one of Claims 1 to 4, characterised in that the first conveyor means (3) co-operates with a distributing screw (4) extending parallel thereto and, with the guide member (9) and conveyor wheel (6), forms a curved path, and in that a third conveyor means (22), for accommodating sorted defective containers (21), is provided tangentially to the conveyor wheel (6) and parallel to the first conveyor means (3).

6. An apparatus according to one of Claims 1 to 4, characterised in that the link chain (10) of the guide member (9) is disposed parallel near to the first conveyor means (3) and, in the starting position, in co-operation with the conveyor means (3), allows a container (2) a free passage, and in that on the other side of the conveyor means (3), close and parallel thereto and to the link chain (10), the second conveyor means (6) is arranged preferably in a straight line, the arrangement being such that a defective container (21) is diverted from the second conveyor means (6).

7. An apparatus according to one of Claims 1 to 6, characterised in that, between the signal emitter of the inspection station (5) and the means (28) actuated by the signals, there is disposed a signal-pulse memory (26) for engaging and disengaging the control members (23) in the control chain (15).

8. An apparatus according to one of Claims 1 to 7, characterised in that the control members (23) are discs of a shape corresponding to the cross-sectional shape of the containers (2, 21) and which, with the control chain (15), rotate in a conveying direction and plane parallel to the control chain (15) immediately above the displacement member (14), and in that the discs (23) are retained by elongate pivots (34) in bores (30) of the chain links (37, 37') for vertical adjustment between detent means (35), the pivots (34) projecting beyond the chain links (37, 37'), and in that at least one mechanically driven displacement mechanism (28) provided as means for adjusting spacing, preferably a hydraulically or pneumatically actuatable piston/cylinder unit, is disposed above the projecting pivots (34) and is actuated by the signal-pulse memory (26) and/or the inspection station (5) so that the container (21) triggering the control-signal pulse and the disc (23) activated by shifting into engagement with the displacement member (14) pass in synchronism with one another through the zone of the switch point (8).

9. An apparatus according to Claim 8, characterised in that in the return path of the control members (23) there is disposed a member, preferably an abutment wedge (29), which resets the discs activated by shifting into the engagement position.

**Revendications**

1. Installation destinée à extraire des récipients défectueux, notamment des bouteilles, d'une chaîne de transport, dans laquelle une station de contrôle contrôle les récipients qui passent devant elle selon des critères prédéterminés, tels que la forme, la dimension, la couleur, le niveau de remplissage, le poids, etc., et commande un aiguillage de façon que ces récipients défectueux soient détournés de la chaîne de transport, caractérisée en ce que l'aiguillage (8) est disposé dans la zone de transition et/ou de chevauchement d'une première installation de transport (3) et d'une seconde installation de transport (6) sous la forme d'un guidage latéral et comporte un organe de guidage (9) non rigide déformable en soi, qui est relié par une série d'éléments de liaison (11) parallèles, articulés de façon à être mobiles sensiblement perpendiculairement à l'organe de guidage (9), à distance, avec concordance de forme, à un organe de réglage non rigide (14) également déformable en soi, qui est amené, par une série d'éléments de rappel (16) sensiblement parallèles, articulés à l'organe de réglage (14) de façon à pouvoir se déplacer sensiblement perpendiculairement à lui, élastiquement en contact avec un gabarit de butée (18) fixe, adapté à l'allure de l'installation de transport (3, 6), et en ce qu'une chaîne de commande sans fin (15), comportant des éléments de commande (23) pouvant être entraînés de façon à se déplacer parallèlement aux récipients (2, 21), à la même distance et en synchronisme, est disposée parallèlement à la première installation de transport (3) dans la zone de l'aiguillage (8) et dans un plan situé au-dessus de celle-ci, organes de commande qui comportent des moyens (34, 35, 36) pour s'accoupler, dans une position d'accouplement, avec l'organe de réglage (14), avec les maillons (37, 37') de la chaîne (15), ou s'en dégager dans une position neutre, et peuvent être accouplés et/ou désaccouplés selon les impulsions de commande de la station de contrôle (5), un élément de commande (23) étant accouplé, en position d'accouplement, avec l'organe de réglage (14) de telle façon que celui-ci s'écarte du gabarit de butée (18) et se place, sous l'action des forces de réglage élastiques des éléments de rappel (16), au contact de l'élément de commande (23), qui fait effectuer à l'organe de réglage (14), selon sa forme et son mouvement, un mouvement sinueux à progression rectiligne qui se transmet, par les éléments de liaison (11), à l'organe de guidage (9) et entraîne un changement de direction d'un récipient (21) défectueux qui se déplace en synchronisme avec l'organe de commande (23) qui est en prise dans la chaîne de transport (1).

2. Installation selon la revendication 1, caractérisée en ce que l'organe de guidage (9) et l'organe de réglage (14) sont, de préférence, des chaînes à maillons (10, 12, 12') de même genre.

3. Installation selon la revendication 1, caractérisée en ce que l'organe de guidage (9) et l'organe de réglage (14) sont, de préférence, des bandes ou courroies élastiques de même genre.

4. Installation selon l'une des revendications 1 à 3, caractérisée en ce que la première installation de transport (3) présente une allure rectiligne, tandis que la seconde installation de transport (6) présente une forme d'arc de cercle, et de préférence de transporteur en étoile.

5. Installation selon l'une des revendications 1 à 4, caractérisée en ce que la première installation de transport (3) coopère avec une vis de distribution sans fin guidée parallèlement à elle (4), et forme avec l'organe de guidage (9), ainsi qu'avec le transporteur en étoile (6), une trajectoire incurvée, et en ce qu'une troisième installation de transport (22), destinée à prélever des récipients défectueux extraits (21), est disposée tangentiellement au transporteur en étoile (6), parallèlement à la première installation de transport (3).

6. Installation selon l'une des revendications 1 à 4, caractérisée en ce que la chaîne à maillons (10) de l'organe de guidage (9) est disposée parallèlement au voisinage de la première installation de transport (3) et permet dans la position initiale, en coopérant avec l'installation de transport (3), un passage libre des récipients (2), et en ce que, de l'autre côté de l'installation de transport (3), à côté de celle-ci et parallèlement à celle-ci et à la chaîne à maillons (10), la seconde installation de transport (6) est disposée, de préférence, en ligne droite, la disposition étant telle qu'un récipient (21) défectueux est rejeté sur la seconde installation de transport (6).

7. Installation selon l'une des revendications 1 à 6, caractérisée en ce qu'une mémoire d'impulsions de signal (26) est disposée entre l'un des transmetteurs de signaux de la station de contrôle (5) et les moyens (28) pour accoupler et désaccoupler les éléments de commande (23), attaqués par les signaux.

8. Installation selon l'une des revendications 1 à 7, caractérisée en ce que les éléments de commande (23) sont des disques de forme correspondant à la forme de section droite des récipients (2, 21) qui se déplacent avec la chaîne de commande (15) dans un plan parallèle à une installation de transport et à la chaîne de commande (15), situé juste au-dessus de l'organe de réglage (14), et en ce que les disques (23) sont retenus de façon à pouvoir être réglés en hauteur, par des axes (34) en forme de tige, dans les alésages (30) des maillons (37, 37') entre des crans (35), les axes (34) dépassant des maillons (37, 37'), et en ce qu'au moins un mécanisme de réglage (28) entraîné mécaniquement, devant constituer un moyen de réglage de distance, de préférence un ensemble piston/cylindre à fonctionnement hydraulique ou pneumatique, est disposé au-dessus des axes (34) qui dépassent et est attaqué par la mémoire d'impulsions de signal (26) et/ou la station de contrôle (5) de façon que le récipient (21) déclenchant l'impulsion de signal de commande et le disque (23) activé par l'accouplement avec l'organe de réglage (14) parcourent en synchronisme mutuel la zone de l'aiguillage (8).

9. Installation selon la revendication 8, caractérisée en ce qu'un élément rappelant les disques activés par passage en position d'accouplement, de préférence une cale de montée (29), est disposé sur le trajet de retour des éléments de commande (23).

8

FIG.1

FIG.2

FIG. 3